# DEMANDE DE BREVET EUROPEEN

(11) **EP 4 253 183 A1**
(43) Date de publication de la demande: **04.10.2023**
(21) Numéro de dépôt: 22173034.4
(22) Date de dépôt: 12.05.2022
(51) Int. Cl.: B60W 60/00, H04W 12/041, H04W 12/065

(54) **DISPOSITIF DE GÉNÉRATION D'UN SIGNAL DE LIMITATION DE MOUVEMENT D'UN VÉHICULE AUTOMOBILE AUTONOME, SYSTÈME DE CONTRÔLE, ENSEMBLE ET PROCÉDÉ ASSOCIÉS**

(30) Priorité: 31.03.2022 FR 2202948
(71) Demandeur: TRANSDEV GROUP INNOVATION, 92130 Issy-les-Moulineaux (FR)
(72) Inventeur: MIRANDA, Paulo, 78960 Voisins Le Bretonneux (FR); DESMOINEAUX, Nicolas, 92400 Courbevoie (FR); VALLOT, Laurent, 28000 Chartres (FR); TAINHA, Jean Michel, 78000 Versailles (FR)
(74) Mandataire: Lavoix

(57) **Abrégé**

Dispositif de génération (20) d'un signal de limitation de mouvement (MA) pour un véhicule automobile autonome (8) équipé d'un dispositif de pilotage automatique (22) adapté pour piloter le véhicule autonome (8), le véhicule autonome (8) appartenant à une flotte de véhicules autonomes (8) dont les déplacements sont supervisés par un centre de contrôle (2), via un réseau de communication (4), le dispositif de génération (20) étant destiné à être embarqué à bord du véhicule automobile autonome (8), le dispositif de génération (20) fonctionnant par itérations successives, et le dispositif de génération (20) comprenant :
- un moyen de génération de clés adapté pour générer une clé spécifique ;
- une unité de communication (26) configurée pour émettre un premier signal (S1), et recevoir un signal de réponse (S2).

## Description

La présente invention concerne un dispositif de génération d'un signal de limitation de mouvement pour un véhicule automobile autonome.

L'invention concerne en outre un procédé de génération.

La présente invention a pour domaine celui du contrôle des véhicules autonomes, et, en particulier, celui du contrôle à distance d'une flotte de véhicules autonomes.

Par « véhicule autonome », il est entendu un véhicule adapté pour se déplacer selon une trajectoire sans intervention d'un conducteur humain, ni à bord du véhicule, ni à distance. Un tel véhicule comporte dont un dispositif de pilotage automatique permettant de déplacer le véhicule selon une trajectoire.

Il est connu de surveiller les différents véhicules d'une flotte de véhicules autonomes depuis un centre de contrôle de la flotte qui est en liaison, à travers un réseau de communication adapté, avec chacun des véhicules de la flotte.

En cas de détection d'un problème affectant un véhicule, le centre de contrôle doit pouvoir commander l'arrêt du véhicule par la transmission d'une consigne d'arrêt adaptée.

Or, par exemple lors d'une défaillance du réseau de communication, aucune consigne d'arrêt ne peut plus être transmise au véhicule. En cas de problème, le centre de contrôle perd donc toute capacité d'arrêter le véhicule.

Il convient donc de garantir, à tout instant, la capacité de transmission d'une telle consigne et la capacité de prise en compte de cette consigne par le véhicule destinataire, afin d'être certain de pourvoir effectivement commander l'arrêt de n'importe lequel des véhicules de la flotte en cas de nécessité.

Des exigences élevées sont alors définies en ce qui concerne la fiabilité de transmission du réseau de communication, ainsi que la fiabilité de traitement par chaque véhicule autonome d'une consigne d'arrêt.

Toutefois, la mise en oeuvre de telles exigences est relativement complexe et fastidieuse.

Un objectif de la présente invention est alors de garantir le contrôle d'un véhicule autonome d'une flotte de véhicules, notamment un contrôle de l'arrêt du véhicule, par des moyens qui soient plus simples à mettre en oeuvre, tout en étant particulièrement fiables.

A cet effet, l'invention a pour objet un dispositif de génération d'un signal de limitation de mouvement pour un véhicule automobile autonome équipé d'un dispositif de pilotage automatique adapté pour piloter le véhicule autonome, le véhicule autonome appartenant à une flotte de véhicules autonomes dont les déplacements sont supervisés par un centre de contrôle, via un réseau de communication, le dispositif de génération étant destiné à être embarqué à bord du véhicule automobile autonome, le dispositif de génération fonctionnant par itérations successives, et le dispositif de génération comprenant :
- un moyen de génération de clés adapté pour générer une clé spécifique d'une itération courante du fonctionnement du dispositif de génération ;
- une unité de communication configurée pour :
   - émettre un premier signal, à destination du centre de contrôle, via le réseau de communication, le premier signal comprenant la clé spécifique de l'itération courante ;
   - recevoir, durant l'itération courante, un second signal, dit signal de réponse, depuis le centre de contrôle, via ledit réseau de communication, en réponse au premier signal, le signal de réponse comprenant une clé transformée résultant de la transformation de la clé spécifique de l'itération courante selon une fonction de transfert prédéterminée ;
- une unité de calcul configurée pour calculer un troisième signal, dit signal attendu, comprenant une clé attendue résultant de la transformation de la clé spécifique de l'itération courante selon la fonction de transfert prédéterminée ;
- une unité de comparaison configurée pour comparer le signal de réponse et le signal attendu à l'itération courante pour obtenir un résultat intermédiaire, et pour générer un résultat de comparaison à partir du résultat intermédiaire ; et,
- une unité de génération configurée pour générer, à partir du résultat de comparaison, un premier message, pour incorporer le premier message dans le signal de limitation de mouvement pour l'itération courante, et pour appliquer le signal de limitation de mouvement généré en entrée du dispositif de pilotage automatique,
lorsque le signal attendu est identique au signal de réponse, le signal de limitation de mouvement généré ne contraignant pas le dispositif de pilotage automatique dans le pilotage du véhicule autonome, et lorsque le signal attendu est différent du signal de réponse, le signal de limitation de mouvement généré contraignant le dispositif de pilotage automatique dans le pilotage du véhicule autonome.

Suivant d'autres aspects avantageux de l'invention, le dispositif de génération comprend une ou plusieurs des caractéristiques suivantes, prises isolément ou suivant toutes les combinaisons techniquement possibles :
- l'unité de comparaison comprend un premier module de calcul configuré pour déterminer une première composante du résultat de comparaison, au moins par application d'une première fonction de comparaison sur le signal de réponse et le signal attendu ; un second module de calcul configuré pour déterminer une seconde composante du résultat de comparaison, au moins par application d'une seconde fonction de comparaison sur le signal de réponse et le signal attendu, la seconde fonction de comparaison étant différente de la première fonction de comparaison et l'unité de génération générant le premier message du signal de limitation de mouvement à partir des première et seconde composantes du résultat de comparaison ;
- le premier module de calcul est configuré pour affecter une valeur fixe primaire relative à une interdiction de mouvement à la première composante en l'absence de la réception du signal de réponse, et le second module de calcul est configuré pour affecter une valeur fixe secondaire relative à une interdiction de mouvement à la seconde composante en l'absence de la réception du signal de réponse, lorsque la première composante présente la valeur fixe primaire et la seconde composante présente la valeur fixe secondaire, le signal de limitation de mouvement généré contraignant le dispositif de pilotage automatique dans le pilotage du véhicule autonome ;
- le signal de limitation de mouvement comprend en outre un second message résultant de la concaténation d'un premier compteur incrémenté lors de l'application de la première fonction de comparaison par le premier module de calcul, et d'un second compteur incrémenté lors de l'application de la seconde fonction de comparaison par le second module de calcul ;
- le signal de limitation de mouvement comprend en outre un troisième message correspondant à une somme de contrôle déterminée à partir du premier message et éventuellement à partir du second message ;
- le premier message du signal de limitation de mouvement prend des valeurs dans une liste prédéterminée de valeurs possibles comportant :
   + une première valeur, indicative d'une autorisation de la poursuite du déplacement en cours ;
   + une seconde valeur, indicative d'une interdiction de la poursuite du déplacement en cours ;
   + une troisième valeur, indicative d'une initialisation du dispositif de génération ; et,
   + une quatrième valeur, indicative d'un signal de limitation invalide ;
- le moyen de génération de clés est un générateur de clés configuré pour générer la clé spécifique à l'itération courante au moyen de l'exécution d'un algorithme pseudo-aléatoire.

L'invention a également pour objet un système de contrôle d'un véhicule autonome destiné à être embarqué dans le véhicule autonome, le système de contrôle comprenant un dispositif de génération tel que décrit ci-dessus, ainsi qu'un dispositif de pilotage automatique du véhicule autonome configuré pour piloter le véhicule autonome en fonction du signal de limitation de mouvement.

Suivant un autre aspect avantageux de l'invention, le système de contrôle comprend une ou plusieurs des caractéristiques suivantes, prises isolément ou suivant toutes les combinaisons techniquement possibles :
- le dispositif de pilotage automatique est configuré pour commander l'arrêt du véhicule autonome lors de la réception d'un signal de limitation de mouvement contraignant pendant un nombre prédéterminé d'itérations consécutives du système de contrôle, lors de la réception d'un signal de limitation de mouvement invalide pendant un nombre prédéterminé d'itérations consécutives du système de contrôle, et/ou en l'absence de la réception de signal de limitation de mouvement pendant un nombre prédéterminé d'itérations consécutives du système de contrôle.

L'invention a en outre pour objet un ensemble comprenant un système de contrôle tel que décrit ci-dessus, et comprenant en outre un centre de contrôle d'une flotte de véhicules autonomes, le centre de contrôle comprenant au moins un dispositif de détermination configuré pour déterminer le signal de réponse en appliquant la fonction de transfert prédéterminée sur le premier signal, et pour transmettre le signal de réponse au dispositif de génération via le réseau de communication.

L'invention a en outre pour objet un procédé de génération mis en œuvre par un dispositif de génération tel que décrit ci-dessus, comportant, pour une itération courante, les étapes suivantes :
- générer une clé spécifique de l'itération courante ;
- élaborer et émettre un premier signal comportant la clé spécifique à destination du centre de contrôle via le réseau de communication ;
- recevoir un signal de réponse de la part du centre de contrôle, via le réseau de communication, le signal de réponse comportant une clé transformée résultant de l'application d'une transformation prédéfinie par le centre de contrôle sur la clé spécifique ;
- élaborer et générer un signal attendu comportant une clé attendue résultant de l'application de la transformation prédéfinie par le dispositif de génération sur la clé spécifique,
- comparer le signal de réponse et le signal attendu pour obtenir un résultat intermédiaire, et élaborer un résultat de comparaison à partir du résultat intermédiaire ; et
- générer un signal de limitation à partir du résultat de comparaison, le signal de limitation de mouvement étant appliqué sur une entrée du dispositif de pilotage automatique pour contraindre le pilotage du véhicule autonome.

L'invention a en outre pour objet un produit programme d'ordinateur comportant des instructions logicielles qui, lorsqu'elles sont exécutées par un calculateur embarqué à bord d'un véhicule autonome, mettent en œuvre un procédé de génération tel que décrit ci-dessus.

Les caractéristiques de l'invention apparaîtront plus clairement à la lecture de la description qui va suivre, donnée uniquement à titre d'exemple illustratif et non limitatif, cette description étant faite en référence aux dessins annexés, sur lesquels :
la figure 1 est une représentation schématique d'un mode de réalisation d'un ensemble comprenant un centre de contrôle distant et un système de contrôle embarqué dans un véhicule et comprenant un dispositif de génération de signal de limitation ; et,
la figure 2 est un ordinogramme d'un mode de réalisation d'un procédé de génération d'un signal de limitation.

De manière générale, l'invention consiste en un calculateur embarqué (appelé dans ce qui suit dispositif de génération) placé en interface entre un dispositif de pilotage automatique du véhicule autonome, et un centre de contrôle distant du véhicule autonome.

Si le dispositif de pilotage a pour fonction de piloter le véhicule pour qu'il suive telle ou telle trajectoire, le centre de contrôle a pour fonction de superviser les déplacements de l'ensemble des véhicules autonomes d'une flotte de véhicule.

Le calculateur embarqué permet alors de garantir que le déplacement du véhicule qu'il équipe est effectivement supervisé par le centre de contrôle.

Le calculateur embarqué transmet régulièrement un signal de limitation de mouvement au dispositif de pilotage dont la valeur est indicative de la situation et est propre à contraindre le dispositif de pilotage.

En fonctionnement nominal, le signal de limitation autorise la poursuite du déplacement du véhicule autonome. En fonctionnement défaillant, le signal de limitation force le dispositif de pilotage à placer le véhicule en sécurité, par exemple en faisant en sorte que le véhicule rallie à vitesse réduite la station la plus proche et s'arrête à cette station pour permettre aux passagers du véhicule de descendre ou par exemple encore en commandant un arrêt immédiat du véhicule.

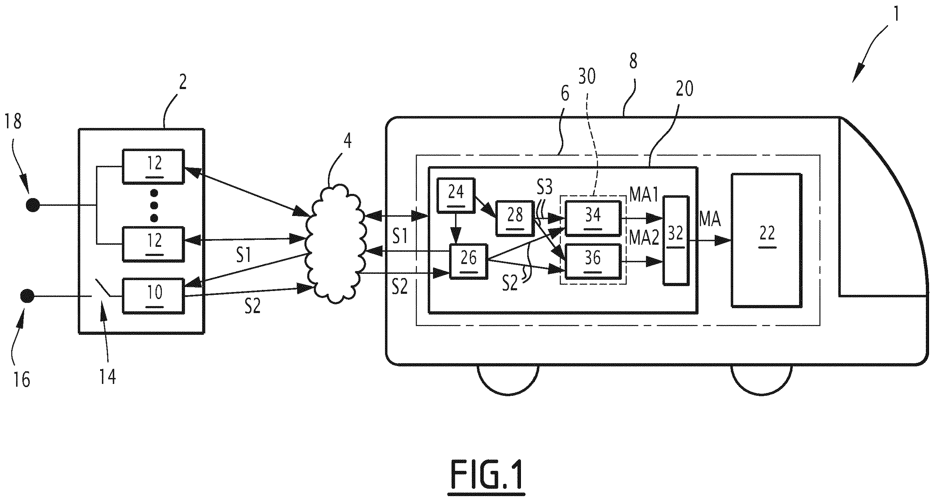

La figure 1 représente un mode de réalisation d'un ensemble 1 comprenant un centre de contrôle 2, un réseau de communication 4 et un système de contrôle 6, qui est embarqué à bord d'un véhicule autonome 8 appartenant à une flotte de véhicules autonomes contrôlée par le centre de contrôle 2. Le système de contrôle 6 comporte un dispositif de génération 20 et un dispositif de pilotage automatique 22 du véhicule 8.

Le dispositif de pilotage automatique 22 est adapté pour piloter le véhicule autonome 8 pour réaliser une mission prédéterminée.

Le dispositif de génération 20 est adapté pour élaborer un signal de limitation de mouvement MA et l'appliquer au dispositif de pilotage automatique 22 afin de contraindre le fonctionnement de ce dernier en cas de perte du lien de supervision avec le centre de contrôle 2.

Le dispositif de génération 20 est adapté pour communiquer, via le réseau 4, avec le centre de contrôle 2.

Le dispositif de génération 20 fonctionne de manière cyclique (ou itérative) de manière à mettre à jour régulièrement la valeur du signal de limitation de mouvement MA en fonction de l'état courant de la communication avec le centre de contrôle 2.

Le centre de contrôle 2 comprend un dispositif de détermination 10. Le dispositif 10 est configuré pour recevoir, du dispositif de génération 20, un premier signal S1 comprenant une clé spécifique à une itération courante du fonctionnement du dispositif de génération 20.

Le dispositif 10 est adapté pour appliquer une fonction de transfert prédéterminée sur la clé spécifique pour obtenir une clé transformée. Le dispositif 10 est adapté pour générer un second signal, dit signal de réponse, S2 comportant la clé transformée. Le dispositif 10 est configuré pour transmettre le signal de réponse S2 à destination du système de contrôle 6, via le réseau de communication 4.

Avantageusement, le centre de contrôle 2 comprend au moins un dispositif de communication 12 pour la communication avec les véhicules autonomes de la flotte. De préférence, le centre de contrôle 2 comporte plusieurs dispositifs de communication 12. Le ou chaque dispositif de communication 12 est par exemple configuré pour transmettre des annonces sonores ou visuelles à des passagers du véhicule autonome 8 et/ou pour obtenir des données mesurées par des capteurs équipant le véhicule autonome 8, telles que des images vidéo de l'intérieur du véhicule autonome 8.

Avantageusement encore, le centre de contrôle 2 comprend un interrupteur 14 configuré pour couper une alimentation électrique 16 du dispositif de détermination 10 afin d'interrompre le fonctionnement du dispositif de détermination 10 et l'empêcher de générer et de transmettre le signal de réponse S2.

De préférence, le ou chaque dispositif de communication 12 est configuré pour être alimenté par une alimentation électrique 18 distincte de l'alimentation électrique 16 du dispositif de détermination 10. Cela permet par exemple à un opérateur de continuer à pouvoir communiquer avec le véhicule autonome 8 en utilisant le dispositif de communication 12, même lorsque l'alimentation électrique 16 du dispositif de détermination 10 est coupée par l'interrupteur 14.

Le réseau de communication 4 est par exemple un réseau sans fil mettant en œuvre un protocole de communication prédéterminé.

Le dispositif de génération 20 comprend un générateur de clé 24, une unité de communication 26, une unité de calcul 28, une unité de comparaison 30 et une unité de génération 32.

Dans le mode de réalisation de la figure 1, le dispositif de génération 20 est un calculateur et le générateur de clé 24, l'unité de communication 26, l'unité de calcul 28, l'unité de comparaison 30 et l'unité de génération 32 sont chacun réalisés au moins partiellement sous forme d'un logiciel, ou d'une brique logicielle, par exemple stockés dans une mémoire du dispositif 20 et exécutables par un processeur du dispositif 20.

Le générateur de clé 24 est configuré pour générer une clé courante en exécutant un algorithme pseudo-aléatoire. La clé courante est spécifique d'une itération du fonctionnement du dispositif de génération 20. Dit autrement, à chaque cycle de fonctionnement du dispositif de génération 20, l'algorithme pseudo-aléatoire est exécuté pour déterminer une nouvelle clé, qui est par conséquent spécifique à ce cycle (à cette itération) du fonctionnement du dispositif 20.

En variante, d'autres moyens de génération de clés sont envisageables, comme par exemple une base de données comprenant une liste prédéfinie de clés. A chaque itération du fonctionnement du dispositif de génération 20, la clé suivante dans la liste est sélectionnée en tant que clé courante.

L'unité de communication 26 est configurée pour générer le premier signal S1 en y incorporant la clé spécifique à l'itération courante. L'unité de communication 26 est configurée pour transmettre le premier signal S1 vers le centre de contrôle 2 via le réseau de communication 4.

L'unité de communication 26 est en outre configurée pour, après émission du premier signal S1 attendre une réponse du centre de contrôle 2 pendant un intervalle de temps prédéterminé.

L'unité de communication 26 est adaptée pour recevoir, du centre de contrôle 2, via le réseau de communication 4, le signal de réponse S2 associé au premier signal S1 et appliquer ce signal de réponse S2 en entrée de l'unité de comparaison 30.

L'unité de calcul 28 est configurée pour calculer une clé attendue en appliquant la fonction de transfert prédéterminée sur la clé spécifique à l'itération courante. La fonction de transfert est identique à celle utilisée par le centre de contrôle 2. L'unité de calcul 28 génère un troisième signal, dit signal attendu S3, incorporant la clé attendue et applique le troisième signal en entrée de l'unité de comparaison 30.

L'unité de comparaison 30 est configurée pour comparer les clés du signal de réponse S2 et du signal attendu S3 de l'itération courante pour obtenir un résultat intermédiaire, et pour générer un résultat de comparaison à partir du résultat intermédiaire.

Dans le mode de réalisation envisagé ici, le résultat de comparaison comporte des première et seconde composantes MA1, MA2, respectivement obtenues à partir de parties du résultat intermédiaire.

Pour ce faire, l'unité de comparaison 30 comprend un premier module de calcul 34, qui est configuré pour déterminer la première composante MA1. Le premier module de calcul 34 est en particulier configuré pour appliquer une première fonction de comparaison dépendante à la fois du signal de réponse S2 et du signal attendu S3 pour obtenir une première partie du résultat intermédiaire, et pour transformer cette première partie en la première composante MA1 du résultat de comparaison.

L'unité de comparaison 30 comprend un second module de calcul 36, qui est configuré pour déterminer la seconde composante MA2. Le second module de calcul 36 est en particulier configuré pour appliquer une seconde fonction de comparaison dépendante à la fois du signal de réponse S2 et du signal attendu S3 pour obtenir une seconde partie du résultat intermédiaire, et pour transformer cette seconde partie en la seconde composante MA2 du résultat de comparaison.

La seconde fonction de comparaison est différente de la première fonction de comparaison.

L'unité de génération 32 est configurée pour générer le signal de limitation de mouvement MA en fonction du résultat de comparaison, en l'occurrence des première et secondes composantes MA1, MA2.

Par exemple, le module de génération 32 incorpore dans le signal de limitation un premier message dont la valeur est obtenue à partir des valeurs MA1 et MA2, parmi une pluralité de valeurs possibles.

Ces valeurs possibles du premier message sont par exemple codées sur 8bits.

Ces valeurs possibles appartiennent à une liste prédéfinie :
- 0x6A, indicative d'une autorisation de la poursuite du déplacement en cours ;
- 0x95, indicative d'une interdiction de la poursuite du déplacement en cours ;
- 0x00, indicative d'une initialisation du dispositif de génération ;
- 0xFF, indicative d'un signal de limitation invalide (par exemple en cas de défaillance du dispositif de génération)

Toute autre valeur du premier message contenu dans le signal de limitation MA sera considérée comme invalide par le dispositif de pilotage 22.

Avantageusement, ces valeurs sont obtenues par concaténation des valeurs de la première et seconde composante MA1 et MA2 notamment codées en bits.

Par exemple, lorsque la première composante MA1 est égale à 0x60, et la seconde composante MA2 est égale à 0x0A, le module de génération 32 obtient la valeur 0x6A pour le premier message.

Par exemple, lorsque MA1=0x90 et MA2=0x05, le module de génération 32 obtient la valeur 0x95 pour le premier message.

Enfin, par exemple, lorsque MA1=0xF0 et MA2=0x0F, le module de génération 32 obtient la valeur 0xFF pour le premier message.

Avantageusement, outre ce premier message, le signal de limitation MA comporte un second message, avantageusement codé sur 8bits, résultant de la concaténation de deux compteurs, le premier compteur étant indicatif de l'exécution du premier module de calcul 34 et le second compteur étant indicatif de l'exécution du second module de calcul 36.

Avantageusement encore, outre ce premier message et/ou ce second message, le signal de limitation MA comporte un troisième message correspondant à une somme de contrôle.

L'unité de génération 32 applique le signal de limitation de mouvement MA au dispositif 22. Ce dernier est adapté pour tenir compte du signal de limitation dans le pilotage du véhicule, en particulier poursuivre le déplacement en cours ou interrompre le déplacement en cours.

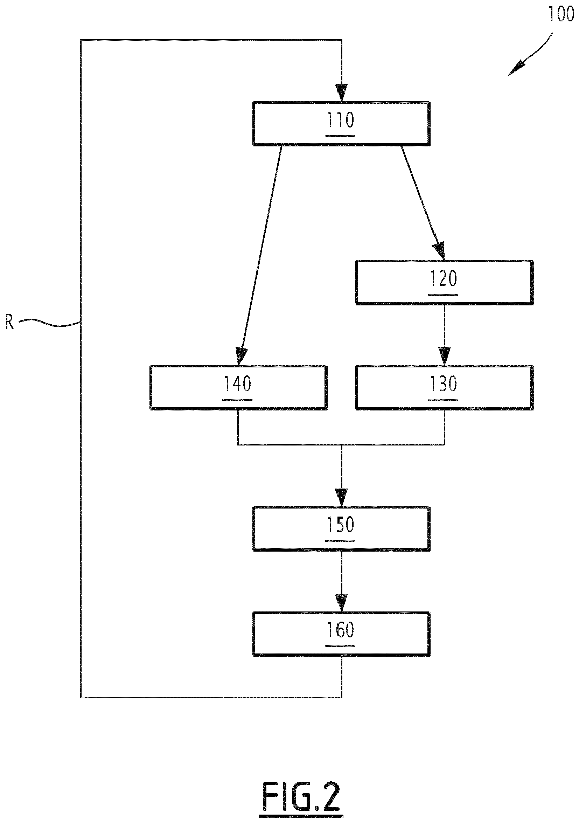

Un mode de réalisation du procédé de détermination 100 du signal de limitation de mouvement MA va maintenant être décrit en référence à la figure 2.

Le procédé de détermination 100 est mis en œuvre par le dispositif de génération 20.

Le procédé de détermination 100 est mis en œuvre par itération (ou cycle). Une itération donnée du procédé 100 comprend une étape de génération 110, une étape d'élaboration et d'émission 120, une étape de réception 130, une étape d'élaboration et de génération 140, une étape de comparaison 150 et une étape de génération 160.

De préférence, après l'exécution de l'itération, le procédé 100 est répété, comme illustré par la flèche R sur la figure 2.

Lors de l'étape de génération 110, le générateur de clé 24 génère la clé spécifique à l'itération selon un algorithme pseudo-aléatoire.

Lors d'une étape d'élaboration et d'émission 120, l'unité de communication 26 élabore et émet le premier signal S1, comprenant la clé spécifique à l'itération, au centre de contrôle 2 via le réseau de communication 4.

Lors de l'étape de réception 130, l'unité de communication 26 reçoit le signal de réponse S2, du centre de contrôle 2, via le réseau de communication 4 en réponse au premier signal S1.

Lors de l'étape d'élaboration et de génération 140, l'unité de calcul 28 élabore et génère le signal attendu S3, en appliquant la fonction de transfert prédéterminée sur le premier signal S1 comprenant la clé spécifique à l'itération.

Les étapes 130 et 140 sont de préférence mises en œuvre simultanément.

L'étape de comparaison 150 est en particulier uniquement mise en œuvre comme suite à la mise en œuvre des étapes 130 et 140.

Lors de l'étape de comparaison 150, l'unité de comparaison 30 reçoit le signal de réponse S2 de l'unité de communication 26 et le signal attendu S3 de l'unité de calcul 28.

L'unité de comparaison 30 compare le signal de réponse S2 avec le signal attendu S3 pour obtenir un résultat intermédiaire, et élabore un résultat de comparaison à partir du résultat intermédiaire. Le résultat de comparaison consiste en particulier en les composantes MA1 et MA2. L'unité de comparaison 30 transmet de préférence les composantes MA1 et MA2 à l'unité de génération 32.

Lors de l'étape de génération 160, l'unité de génération 32 génère le signal de limitation de mouvement MA à partir du résultat de comparaison, en particulier en fonction des composantes MA1, MA2.

L'unité de génération 32 applique le signal de limitation de mouvement MA sur une entrée du dispositif de pilotage automatique 22.

La manière dont le dispositif 22 pilote le véhicule autonome 8 est contraint par la valeur du signal de limitation de mouvement MA.

Lorsque le signal attendu S3 est identique au signal de réponse S2, le signal de limitation de mouvement MA généré ne contraint pas le dispositif de pilotage automatique 22 dans le pilotage du véhicule autonome 8.

Lorsque le signal attendu S3 est différent du signal de réponse S2, le signal de limitation de mouvement MA généré contraint le dispositif de pilotage automatique 22 dans le pilotage du véhicule autonome 8.

En l'absence d'une réception du signal de réponse S2 par le dispositif de génération, le signal de limitation de mouvement MA généré contraint le dispositif de pilotage automatique 22 dans le pilotage du véhicule autonome 8.

En particulier, lorsque la première composante MA1 présente une valeur fixe primaire relative à une interdiction de mouvement et la seconde composante MA2 présente une valeur fixe secondaire relative à une interdiction mouvement, le signal de limitation de mouvement MA généré contraint le dispositif 22 dans le pilotage du véhicule 8.

Le fonctionnement de l'ensemble 1 va maintenant être décrit pour différentes situations ou cas d'usages.

Le dispositif de génération 20 fonctionne par itérations. Au cours de chaque itération, le premier signal S1, le signal de réponse S2, le signal attendu S3 et le signal de limitation de mouvement MA sont déterminés. Les signaux S1, S2 et S3 sont a priori différents d'une itération à l'autre pour garantir l'identification d'une perte des échanges avec le centre de contrôle 2. Dans ce qui suit, le fonctionnement de l'ensemble 1 est décrit pour une itération dite itération courante.

### Cas d'une autorisation de mouvement du véhicule autonome 8

Dans ce cas d'usage, l'ensemble 1 fonctionne dans un mode nominal et le signal de limitation de mouvement MA appliqué au dispositif de pilotage automatique 22 indique une autorisation de mouvement.

Dans le mode nominal, le dispositif de génération 20 ne présente aucune défaillance et le dispositif de détermination 10 est alimenté par l'alimentation électrique 16, l'interrupteur 14 étant fermé.

Le générateur de clés 24 génère la clé spécifique à l'itération courante et la transmet à l'unité de communication 26 et à l'unité de calcul 28.

L'unité de communication 26 construit et transmet le premier signal S1 contenant la clé spécifique au dispositif de détermination 10 du centre de contrôle 2, via le réseau de communication 4.

Le dispositif de détermination 10 détermine la clé transformée à partir de la clé spécifique reçue dans le premier signal. Il génère le signal de réponse S2 contenant la clé transformée et transmet le signal de réponse S2, via le réseau de communication 4, à l'unité de communication 26 en tant que réponse au premier signal S1.

La fonction de transfert utilisée est par exemple égale à *f*(*x*) = 1.5*x* + 1, où *x* est la clé spécifique. Par exemple, si la valeur de la clé spécifique est égale à 2, alors la clé transformée a une valeur égale à 4.

Selon un exemple, la clé spécifique est formée de nombres entiers sans signe et présentant par exemple une taille égale à 64 bits (appelés également UINT64, de l'anglais « unsigned integer » sur 64 bits).

Toujours au cours de l'itération courante, l'unité de calcul 28 calcule une clé attendue en appliquant la même fonction de transfert prédéterminée à la clé spécifique. Selon l'exemple numérique ci-dessus, l'unité de calcul 28 détermine que la clé attendue vaut 4. L'unité 28 génère un signal attendu S3 intégrant cette clé attendue.

Le premier module 34 et le second module 36 reçoivent chacun le signal de réponse S2 et le signal attendu S3.

La première fonction de comparaison utilisée par le premier module de calcul 34 pour déterminer la première partie du résultat intermédiaire est par exemple la différence entre le signal de réponse et le signal attendu. Ainsi, dans l'exemple numérique ci-dessus, la première partie du résultat intermédiaire prend la valeur nulle, S2 et S3 étant identiques.

Le premier module de calcul 34 transforme ensuite cette première partie en la première composante MA1 du résultat de comparaison, en utilisant par exemple un tableau de correspondance prédéterminé pour chaque fonction de comparaison. Le tableau de correspondance pour la première fonction de comparaison indique par exemple que la valeur « 0 » de la première partie du résultat intermédiaire correspond à la valeur « 0x60 » de MA1.

La seconde fonction de comparaison utilisée par le second module de calcul 36 pour déterminer la seconde partie du résultat intermédiaire est par exemple une fonction logique prenant la valeur nulle lorsque les signaux S2 et S3 sont différents et la valeur unité lorsque les signaux S2 et S3 sont identiques. Ainsi, dans l'exemple numérique ci-dessus, la seconde partie du résultat intermédiaire prend la valeur unité, S2 et S3 étant identiques.

Le second module de calcul 36 transforme ensuite cette seconde partie en la seconde composante MA2 du résultat de comparaison, en utilisant par exemple le tableau de correspondance prédéterminé pour la seconde fonction de comparaison. Ce tableau indique par exemple que la valeur unité de la seconde partie du résultat intermédiaire correspond à la valeur « 0×0A » de MA2.

Enfin, l'unité 32 génère le signal de limitation de mouvement MA à partir des première et seconde composantes MA1 et MA2.

Par exemple, l'unité 32 concatène les valeurs des composantes MA1, MA2, notamment exprimées en bits, pour obtenir une valeur concaténée formant le premier message du signal MA. Dans l'exemple numérique ci-dessus, la valeur concaténée est alors « 0×6A », ce qui correspond à une « autorisation de mouvement.

Selon un autre exemple, l'unité 32 utilise un transfert prédéterminé autre qu'une concaténation pour obtenir le signal de limitation de mouvement MA à partir de le première composante MA1 et de la deuxième composante MA2, par exemple une fonction formant la somme de la première composante MA1 et de la deuxième composante MA2.

En recevant ce signal, le dispositif de pilotage automatique 22 commande le départ ou la poursuite du mouvement du véhicule autonome 8 selon la trajectoire courante.

### Cas d'une interdiction de mouvement du véhicule autonome 8

Dans ce qui suit, seules les différences entre le présent cas d'usage et le cas d'usage précité sont mises en évidence.

Dans ce cas d'usage, alors que le dispositif de génération 20 fonctionne en mode nominal, le signal de limitation de mouvement MA généré correspond à une interdiction de mouvement car le second signal S2 n'est pas reçu de la part du centre de contrôle 2, à cause par exemple de la coupure de l'alimentation électrique 16 (par ouverture de l'interrupteur 14) du dispositif de détermination 10.

Dans ces conditions, suite à la transmission du premier signal S1 vers le centre de contrôle 2, l'unité de communication 26 attend en vain la réception du signal de réponse S2 correspondant.

Dans ce cas, l'unité de communication 26 ne transmet aucun signal vers le premier et le second module 34, 36.

A l'issue d'une durée d'attente prédéterminée, en l'absence de la réception du signal de réponse S2 par les modules 34 et 36, le premier module 34 affecte une valeur fixe primaire relative à une interdiction à la première composante MA1, par exemple 0x90, et le second module de calcul 36 affecte une valeur fixe secondaire relative à une interdiction à la seconde composante MA2, par exemple 0x05.

En particulier, il n'est pas possible aux modules 34, 36 d'appliquer la première et seconde fonction de comparaison en l'absence de réception du signal S2, car ce signal S2 est un argument de la première et seconde fonction de comparaison, requis pour l'application de la fonction respective.

Les valeurs de la première composante MA1 et de la deuxième composante MA2, dans le présent cas MA1=0×90 et MA2=0×05, sont transmises à l'unité 32 qui génère le signal de limitation de mouvement MA adapté, dans le présent cas MA=0×95.

La valeur fixe primaire et la valeur fixe secondaire sont ainsi des valeurs prédéterminées de manière à obtenir le signal de limitation de mouvement MA indiquant une interdiction de mouvement du véhicule autonome 8.

Par exemple, l'unité 32 génère le premier message du signal de limitation de mouvement MA de la même manière que dans le cas d'autorisation de mouvement, par exemple par concaténation des valeurs de la première composante MA1 et de la deuxième composante MA2.

Dans le cas présent, la valeur du premier message obtenue est indicative d'une interdiction de mouvement du véhicule autonome 8 (0×95).

Lors de la réception de cette valeur, le dispositif de pilotage automatique 22 commande l'arrêt du véhicule autonome 8. Un arrêt peut être l'arrêt immédiat du véhicule ou, de préférence, consiste à piloter en sécurité le véhicule 8 pour rejoindre la station la plus proche.

De préférence, il suffit de la réception d'un signal de limitation MA indicatif d'un arrêt pendant une seule itération pour déclencher l'arrêt. Cela permet de commander l'arrêt rapidement. En variante, le dispositif 22 attend de recevoir un signal de limitation indicatif d'un arrêt durant plusieurs itérations successives pour déclencher l'arrêt.

### Cas d'une défaillance affectant le dispositif de génération 20

Dans ce cas d'usage, le dispositif de génération 20 fonctionne en mode dégradé suite à la détection d'une défaillance l'affectant.

Par exemple, le premier module de calcul 34 génère la valeur MA1=0x0F et le second module de calcul 36 génère la valeur MA2=0xF0.

L'unité de génération 32 émet alors un signal de limitation de mouvement MA dont le premier message (0xFF) est indicatif d'un signal invalide.

L'unité de génération 32 obtient le premier message du signal de limitation de mouvement MA de préférence par concaténation des composantes MA1, MA2.

Lorsque le dispositif de pilotage automatique 22 reçoit ce signal invalide, le dispositif de pilotage automatique 22 commande l'arrêt du véhicule autonome 8, par exemple à la prochaine station.

L'arrêt est commandé après une ou plusieurs itération(s) consécutive(s) avec un signal invalide.

### Cas d'une défaillance du premier module de calcul 34 et/ou du second module de calcul 36

Selon ce cas d'usage, le dispositif de génération 20 fonctionne en mode nominal, mais on est capable de détecter une défaillance du premier et/ou du second module de calcul.

Le premier module de calcul 34 incrémente un premier compteur lors de l'application de la première fonction de comparaison, et transmet une valeur de ce premier compteur à l'unité de génération 32.

Le second module de calcul 36 incrémente un second compteur lors de l'application de la seconde fonction de comparaison, et transmet une valeur de ce second compteur à l'unité de génération 32.

Chaque compteur présente par exemple une taille de 4bits.

L'unité de génération 32 concatène les valeurs du premier compteur et du second compteur dans un second message.

Le second message est incorporé au signal de limitation de mouvement MA et est transmis au dispositif 22.

Le dispositif 22 est adapté pour comparer la valeur du premier compteur avec celui du second compteur, et commande l'arrêt du véhicule 8 à la prochaine station si leurs valeurs sont différentes.

En variante, le dispositif 22 commande l'arrêt immédiat du véhicule 8 si leurs valeurs sont différentes.

De préférence, l'arrêt n'est commandé qu'après un nombre prédéterminé d'itérations consécutives conduisant à une différence entre les deux compteurs.

Cela permet de détecter, au niveau du dispositif 22, si l'un des modules 34 et 36 n'applique pas la fonction de comparaison. En effet, dans ce cas, le compteur correspondant n'est pas incrémenté.

### Cas d'une absence de réception du signal de limitation de mouvement MA par le dispositif de pilotage automatique 22

Dans ce cas d'usage, le dispositif de pilotage automatique 22 ne reçoit aucun message de limitation.

Lorsque le dispositif de pilotage automatique 22 détermine l'absence d'une réception du signal de limitation de mouvement MA pendant un nombre prédéterminé d'itérations consécutives, le dispositif de pilotage automatique 22 commande l'arrêt du véhicule autonome 8.

Le nombre prédéterminé d'itérations est de préférence supérieur ou égal à 2. Cela permet en particulier d'éviter de commander l'arrêt lors de l'absence de transmission du signal MA pendant une seule itération.

### Cas de défaillance de la transmission du signal de limitation de mouvement MA au dispositif de pilotage automatique 22

Dans ce cas d'usage, il y a défaillance de la connexion entre le dispositif de génération 20 et le dispositif de pilotage automatique 22.

L'unité de génération 32 détermine une somme de contrôle (ou *checksum* en anglais) à partir du premier message et optionnellement du second message.

L'unité de génération 32 ajoute la somme de contrôle dans le signal de limitation de mouvement MA avant de le transmettre au dispositif 22.

A la réception du signal de limitation, le dispositif 22 détermine, de la même manière que l'unité de génération 32, une somme de contrôle, dite somme de contrôle attendue à partir du premier message et optionnellement du second message. Le dispositif 22 compare la somme de contrôle comprise dans le signal MA et la somme de contrôle attendue.

Lorsque le dispositif 22 détermine une différence, de préférence pendant un nombre prédéterminé d'itérations consécutives, le dispositif de pilotage automatique 22 commande l'arrêt du véhicule autonome 8.

Le nombre prédéterminé d'itérations est de préférence supérieur ou égal à 2. Cela permet en particulier d'éviter la commande d'arrêt lors d'une défaillance de transmission du signal MA pendant une seule itération.

### Variantes et avantages

On conçoit que le dispositif de génération 20 et le procédé de détermination 100 selon l'invention présentent un grand nombre d'avantages.

Le dispositif de génération 20 permet de contraindre le pilotage d'un véhicule autonome 8 en fonction de l'état de la liaison avec le centre de contrôle 2, puisque le dispositif de génération 20 embarqué détermine le signal de limitation de mouvement MA en fonction du signal de réponse reçu S2.

Lors d'une défaillance du réseau de communication 4 impliquant une interruption de la communication entre le centre de contrôle 2 et le véhicule autonome 8, ce dernier est par exemple arrêté à la prochaine station.

En particulier, grâce au dispositif de génération 20, il est possible, sans compromettre la sécurité du véhicule 8, de réaliser la communication entre le dispositif de génération 20 et le centre de contrôle 2 par un réseau de communication standard, notamment un réseau ne présentant aucune exigence élevée quant à sa fiabilité.

Le dispositif de génération 20 permet de garantir qu'une interruption (comme une coupure de l'alimentation électrique) ou un dysfonctionnement (impossibilité de calculer le résultat de la transformation de clé spécifique) du dispositif de détermination 10 soit pris en compte pour la mise en sécurité du véhicule autonome 8 pour le pilotage.

En effet, quel que soit la raison de l'absence de réception du signal S2 (interruption du dispositif 10, défaillance du réseau 4...), le dispositif de génération 20 détecte cette absence pour commander l'arrêt du véhicule.

Avantageusement, lors d'une erreur de calcul par le dispositif de génération 20 ou d'une défaillance de la transmission du signal MA entre le dispositif 20 et le dispositif 22, le dispositif 22 commande l'arrêt du véhicule 8.

Le dispositif de génération 20 permet en particulier au moins de limiter, voire d'éviter, l'envoi erroné du signal de limitation de mouvement MA indiquant une autorisation de la poursuite du déplacement du véhicule, même en utilisant des composants matériels et logiciels de type standard.

## Revendications

1. Dispositif de génération (20) d'un signal de limitation de mouvement (MA) pour un véhicule automobile autonome (8) équipé d'un dispositif de pilotage automatique (22) adapté pour piloter le véhicule autonome (8), le véhicule autonome (8) appartenant à une flotte de véhicules autonomes (8) dont les déplacements sont supervisés par un centre de contrôle (2), via un réseau de communication (4), le dispositif de génération (20) étant destiné à être embarqué à bord du véhicule automobile autonome (8), le dispositif de génération (20) fonctionnant par itérations successives, et le dispositif de génération (20) comprenant :
- un moyen de génération de clés adapté pour générer une clé spécifique d'une itération courante du fonctionnement du dispositif de génération (20) ;
- une unité de communication (26) configurée pour :
- émettre un premier signal (S1), à destination du centre de contrôle (2), via le réseau de communication (4), le premier signal (S1) comprenant la clé spécifique de l'itération courante ;
- recevoir, durant l'itération courante, un second signal, dit signal de réponse (S2), depuis le centre de contrôle (2), via ledit réseau de communication (4), en réponse au premier signal (S1), le signal de réponse (S2) comprenant une clé transformée résultant de la transformation de la clé spécifique de l'itération courante selon une fonction de transfert prédéterminée ;
- une unité de calcul (28) configurée pour calculer un troisième signal, dit signal attendu (S3), comprenant une clé attendue résultant de la transformation de la clé spécifique de l'itération courante selon la fonction de transfert prédéterminée ;
- une unité de comparaison (30) configurée pour comparer le signal de réponse (S2) et le signal attendu (S3) à l'itération courante pour obtenir un résultat intermédiaire, et pour générer un résultat de comparaison à partir du résultat intermédiaire ; et,
- une unité de génération (32) configurée pour générer, à partir du résultat de comparaison, un premier message, pour incorporer le premier message dans le signal de limitation de mouvement (MA) pour l'itération courante, et pour appliquer le signal de limitation de mouvement (MA) généré en entrée du dispositif de pilotage automatique (22),
lorsque le signal attendu (S3) est identique au signal de réponse (S2), le signal de limitation de mouvement (MA) généré ne contraignant pas le dispositif de pilotage automatique (22) dans le pilotage du véhicule autonome (8), et lorsque le signal attendu (S3) est différent du signal de réponse (S2), le signal de limitation de mouvement (MA) généré contraignant le dispositif de pilotage automatique (22) dans le pilotage du véhicule autonome (8).

2. Dispositif de génération (20) selon la revendication 1, dans lequel l'unité de comparaison (30) comprend :
- un premier module de calcul (34) configuré pour déterminer une première composante (MA1) du résultat de comparaison, au moins par application d'une première fonction de comparaison sur le signal de réponse (S2) et le signal attendu (S3) ;
- un second module de calcul (36) configuré pour déterminer une seconde composante (MA2) du résultat de comparaison, au moins par application d'une seconde fonction de comparaison sur le signal de réponse (S2) et le signal attendu (S3),
la seconde fonction de comparaison étant différente de la première fonction de comparaison et l'unité de génération (32) générant le premier message du signal de limitation de mouvement (MA) à partir des première et seconde composantes (MA1, MA2) du résultat de comparaison.

3. Dispositif de génération (20) selon la revendication 2, dans lequel le premier module de calcul (34) est configuré pour affecter une valeur fixe primaire relative à une interdiction de mouvement à la première composante (MA1) en l'absence de la réception du signal de réponse (S2), et le second module de calcul (36) est configuré pour affecter une valeur fixe secondaire relative à une interdiction de mouvement à la seconde composante (MA2) en l'absence de la réception du signal de réponse (S2),
lorsque la première composante (MA1) présente la valeur fixe primaire et la seconde composante (MA2) présente la valeur fixe secondaire, le signal de limitation de mouvement (MA) généré contraignant le dispositif de pilotage automatique (22) dans le pilotage du véhicule autonome (8).

4. Dispositif de génération (20) selon l'une quelconque des revendications 2 à 3, dans lequel le signal de limitation de mouvement (MA) comprend en outre un second message résultant de la concaténation d'un premier compteur incrémenté lors de l'application de la première fonction de comparaison par le premier module de calcul (34), et d'un second compteur incrémenté lors de l'application de la seconde fonction de comparaison par le second module de calcul (36).

5. Dispositif de génération (20) selon l'une quelconque des revendications 1 à 4, dans lequel le signal de limitation de mouvement (MA) comprend en outre un troisième message correspondant à une somme de contrôle déterminée à partir du premier message et éventuellement à partir du second message.

6. Dispositif de génération (20) selon l'une quelconque des revendications 1 à 5, dans lequel le premier message du signal de limitation de mouvement (MA) prend des valeurs dans une liste prédéterminée de valeurs possibles comportant :
- une première valeur, indicative d'une autorisation de la poursuite du déplacement en cours ;
- une seconde valeur, indicative d'une interdiction de la poursuite du déplacement en cours ;
- une troisième valeur, indicative d'une initialisation du dispositif de génération (20) ; et,
- une quatrième valeur, indicative d'un signal de limitation invalide.

7. Dispositif de génération (20) selon l'une quelconque des revendications précédentes, dans lequel le moyen de génération de clés est un générateur de clés (24) configuré pour générer la clé spécifique à l'itération courante au moyen de l'exécution d'un algorithme pseudo-aléatoire.

8. Système de contrôle (6) d'un véhicule autonome (8) destiné à être embarqué dans le véhicule autonome (8), le système de contrôle (6) comprenant un dispositif de génération (20) selon l'une quelconque des revendications précédentes, ainsi qu'un dispositif de pilotage automatique (22) du véhicule autonome (8) configuré pour piloter le véhicule autonome (8) en fonction du signal de limitation de mouvement (MA).

9. Système de contrôle (6) selon la revendication 8, dans lequel le dispositif de pilotage automatique (22) est configuré pour commander l'arrêt du véhicule autonome (8) lors de la réception d'un signal de limitation de mouvement contraignant pendant un nombre prédéterminé d'itérations consécutives du système de contrôle (6), lors de la réception d'un signal de limitation de mouvement invalide pendant un nombre prédéterminé d'itérations consécutives du système de contrôle (6), et/ou en l'absence de la réception de signal de limitation de mouvement (MA) pendant un nombre prédéterminé d'itérations consécutives du système de contrôle (6).

10. Ensemble (1) comprenant un système de contrôle (6) selon l'une quelconque des revendications 8 à 9, et comprenant en outre un centre de contrôle (2) d'une flotte de véhicules autonomes (8), le centre de contrôle (2) comprenant au moins un dispositif de détermination (10) configuré pour déterminer le signal de réponse (S2) en appliquant la fonction de transfert prédéterminée sur le premier signal (S1), et pour transmettre le signal de réponse (S2) au dispositif de génération (20) via le réseau de communication (4).

11. Procédé de génération mis en œuvre par un dispositif de génération (20) selon l'une quelconque des revendications 1 à 7, comportant, pour une itération courante, les étapes suivantes :
- générer (110) une clé spécifique de l'itération courante ;
- élaborer (120) et émettre un premier signal (S1) comportant la clé spécifique à destination du centre de contrôle (2) via le réseau de communication (4) ;
- recevoir (130) un signal de réponse (S2) de la part du centre de contrôle (2), via le réseau de communication (4), le signal de réponse (S2) comportant une clé transformée résultant de l'application d'une transformation prédéfinie par le centre de contrôle (2) sur la clé spécifique ;
- élaborer et générer (140) un signal attendu (S3) comportant une clé attendue résultant de l'application de la transformation prédéfinie par le dispositif de génération (20) sur la clé spécifique,
- comparer (150) le signal de réponse (S2) et le signal attendu (S3) pour obtenir un résultat intermédiaire, et élaborer un résultat de comparaison à partir du résultat intermédiaire ; et
- générer (160) un signal de limitation à partir du résultat de comparaison, le signal de limitation de mouvement (MA) étant appliqué sur une entrée du dispositif de pilotage automatique (22) pour contraindre le pilotage du véhicule autonome (8).

12. Produit programme d'ordinateur comportant des instructions logicielles qui, lorsqu'elles sont exécutées par un calculateur embarqué à bord d'un véhicule autonome (8), mettent en œuvre un procédé de génération conforme à la revendication précédente.
